# EUROPEAN PATENT SPECIFICATION

(11) **EP 3 737 151 B1**
(45) Date of publication and mention of the grant of the patent: **19.07.2023**
(21) Application number: 19172812.0
(22) Date of filing: 06.05.2019
(51) Int. Cl.: H04W 36/00, H04W 36/12, H04W 88/18, H04W 76/10

(54) **MOBILE COMMUNICATION CORE NETWORK DEVICE AND METHOD FOR MANAGING WIRELESS COMMUNICATIONS AFTER INSERTION OF AN INTERMEDIATE-SESSION MANAGEMENT FUNCTION**
MOBILKOMMUNIKATIONSKERNNETZWERKVORRICHTUNG UND VERFAHREN ZUR VERWALTUNG DRAHTLOSER KOMMUNIKATIONEN NACH DEM EINFÜGEN EINER ZWISCHENSITZUNGSVERWALTUNGSFUNKTION
DISPOSITIF DE RÉSEAU CENTRAL DE COMMUNICATION MOBILE ET PROCÉDÉ DE GESTION DE COMMUNICATIONS SANS FIL APRÈS L'INSERTION D'UNE FONCTION DE GESTION DE SESSION INTERMÉDIAIRE

(43) Date of publication of application: 11.11.2020
(73) Proprietor: NTT DOCOMO, INC., Chiyoda-ku Tokyo 100-6150 (JP)
(72) Inventor: SAMA, Malla Reddy, 80687 Munich (DE); THAKOLSRI, Srisakul, 80687 Munich (DE); GUERZONI, Riccardo, 80687 Munich (DE)
(74) Representative: Viering, Jentschura & Partner mbB Patent- und Rechtsanwälte

(56) References cited:
- US-A1- 2019 098 536
- CHINA MOBILE: "Procedure update for handover with I-SMF insertion", 3GPP DRAFT; S2-1903703 PROCEDURE UPDATE FOR HANDOVER WITH I-SMF INSERTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDE , vol. SA WG2, no. Xi'an, China; 20190408 - 20190412 2 April 2019 (2019-04-02), XP051719849, Retrieved from the Internet: URL:http://www.3gpp.org/ftp/tsg%5Fsa/WG2%5 FArch/TSGS2%5F132%5FXiAn/Docs/S2%2D1903703 %2Ezip [retrieved on 2019-04-02]
- "3rd Generation Partnership Project; Technical Specification Group Services and System Aspects; Procedures for the 5G System; Stage 2 (Release 16)", 3GPP STANDARD; TECHNICAL SPECIFICATION; 3GPP TS 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.0.1, 1 April 2019 (2019-04-01), pages 1-420, XP051723247, [retrieved on 2019-04-01]
- NOKIA ET AL: "Use of a Create operation at the first contact from I-SMF/V-SMF to SMF/H-SMF", 3GPP DRAFT; S2-1903107 ETSUN 23502 CREATE-UPD V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Xian, P.R. China; 20190208 - 20190212 2 April 2019 (2019-04-02), XP051719274, Retrieved from the Internet: URL:http://www.3gpp.org/ftp/tsg%5Fsa/WG2%5 FArch/TSGS2%5F132%5FXiAn/Docs/S2%2D1903107 %2Ezip [retrieved on 2019-04-02]

## Description

The present disclosure relates to mobile communication network arrangements and methods for managing a mobile communication network arrangement to support session continuity upon insertion of an intermediate session management function (I-SMF) between an access and mobility management function (AMF) and one or more session management functions (SMFs).

Recent releases of the Third Generation Partnership Project (3GPP) specifications have introduced standards to implement a Fifth Generation (5G) mobile communication network. The 5G system includes three main components: the 5G Access Network, the 5G Core Network, and the User Equipment (UE). The methods and devices described herein pertain towards management schemes and mechanisms of the core network component of 5G.

The 5G system is designed to support data services which enable new functions, e.g. network function virtualization, software defined networking, Cloud native, etc., which arise due to the wider range of profiles and data connectivity offered by 5G networks. Accordingly, while keeping some features of the 4G network architecture, the 3GPP has updated other features of the overall architecture of the 5G network.

For example, an architecture with separate control plane (CP) functions and user plane (UP) functions has been retained for the 5G network in order to facilitate the independent scaling and deployment of these functions. Also, the dependencies between the access network and the core network have been reduced with a converged common interface in order to integrate different 3GPP, as well as non-3GPP, radio access technologies (RATs).

Elements of the 5G core network, referred to as Network Functions (NFs) or Network Function Services, facilitate the enablement of the different data services and requirements.

These NFs may be software-based so that they may be more easily adaptable according to particular needs.

Two of these NFs include the Access and Mobility Management Function (AMF) and the Session Management Function (SMF) which serve as control plane functions in the 5G core network architecture. The AMF is responsible for receiving all connection and session related information from the UE and is responsible for handling connection and mobility management tasks. The SMF is responsible for interacting with the decoupled data plane; creating, updating, and removing Protocol Data Unit (PDU) Sessions; and managing session context with the User Plane Function (UPF), another NF of the 5G core network which interfaces with the (radio) access network ((R)AN).

As of Release 15 of the 3GPP specification, a single SMF was provided to serve a corresponding public landline mobile network (PLMN), so, accordingly, the SMF could not be changed during the lifetime of a PDU session. Release 16 of the 3GPP introduced an intermediate SMF (I-SMF) to maintain session continuity if the UE is removed from a particular SMF service area. However, there is no accounting on how to handle SMF events in the network which have already been subscribed to with the AMF. Accordingly, mechanisms and schemes to account for these already subscribed-to events are desirable.

China Mobile: "Procedure update for handover with I-SMF insertion 3GPP Draft S2-1903703 TSG-SA WG2 Meeting #132; 3rd Generation Partnership Project (3GPP) Mobile Competence Centre, 650, route des Lucioles; F-06921 Sophia Antipolis Cedex, France; April 2, 2019; generally, discloses methods that enable an I-SMF to be inserted in the core network of a mobile communication network.

3rd Generation Partnership Project; Technical Specification Group Services and System Aspects; Procedures for the 5G System; Stage 2 (Release 16); 3rd Generation Partnership Project (3GPP) Mobile Competence Centre, 650, route des

Lucioles; F-06921 Sophia Antipolis Cedex, France; April 1, 2019; generically discloses methods that enable an I-SMF to be inserted in the core network of a mobile communication network.

A first aspect of the present invention provides a method according to claim 1.

Additional features for advantageous embodiments of the invention are provided in the dependent claims 2 to 6 thereto.

Further additional non-claimed features may include that the SMF information comprises an SMF address.

Further additional non-claimed features may include that the response to the session request from the at least one SMF further includes one or more of a PDU context information and/or an event notification information.

Further additional non-claimed features may further include that upon receiving the response to the session request from the at least one SMF, defining a Notification Correlation ID for the at least event subscription.

The further additional non-claimed features above may further include that the first identification includes at least one of a Subscription Correlation ID, a Notification Target Address and/or a Notification Correlation of the I-SMF, and/or a Notification URI.

Additional non-claimed features may further include an event notification from the AMF that an event relating to the at least event subscription has occurred, and forwarding the event notification to the SMF.

Additional non-claimed features may further include at the I-SMF, receiving a subsequent event subscription request from the SMF, creating a respective first identification for the subsequent event subscription, and forwarding the respective first identification for the subsequent event subscription to the AMF or the new AMF to trigger the AMF or the new AMF to provide an I-SMF address for the subsequent event subscription at the I-SMF.

The additional non-claimed features above may further include that the subsequent event subscription request is for a first time event subscription or an update to an existing event subscription.

A second aspect of the present invention provides an intermediate-session management function device according to claim 7.

A third aspect of the present invention provides a method according to claim 8.

Additional non-claimed features for advantageous embodiments thereto may further include adding a new AMF, and relocating a session with the I-SMF from the AMF to the new AMF, wherein the new AMF provides at least one of the I-SMF and/or the SMF with an updated first identification based on the first subscription information.

A fourth aspect of the present invention provides an access and mobility management function device for managing wireless communications after inserting an intermediate-session management function (I-SMF) to communicate between an access and mobility management function (AMF) and one or more session management functions (SMFs), according to claim 9.

A fifth aspect of the present invention provides a method according to claim 10.

Additional non-claimed features for advantageous embodiments thereto may further include transmitting, from the AMF, an event notification to the I-SMF upon occurrence of an event relating to the at least event subscription.

Additional non-claimed features may further include adding a new AMF, and relocating a session with the I-SMF from the AMF to the new AMF, wherein the new AMF provides at least one of the I-SMF and/or the SMF with an updated first identification based on the first subscription information.

Additional non-claimed features may further include, at the I-SMF, receiving a subsequent event subscription request from the SMF, creating a respective first identification for the subsequent event subscription, and forwarding the respective first identification for the subsequent event subscription to the AMF or the new AMF to trigger the AMF or the new AMF to provide an I-SMF address for the subsequent event subscription at the I-SMF.

The additional non-claimed features above may further include, wherein the subsequent event subscription request is for a first time event subscription or an update to an existing event subscription.

A sixth aspect of the present invention provides an access and mobility management function device according to claim 11.

It should be noted that one or more of the features of any of the examples above may be combined with any one of the other examples. Likewise, it should be noted that one or more features of the ensuing explanation may be combined with any one or more of the other features of this disclosure.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 shows an exemplary core network architecture prior to I-SMF insertion according to some aspects;
Figure 2 shows an exemplary core network architecture after the intermediate SMF (I-SMF) insertion according to some aspects;
Figure 3 shows an exemplary configuration illustrating the RAN interfacing with the core network according to some aspects;
Figure 4 shows exemplary message sequence charts (MSCs) according to some aspects;
Figure 5 shows exemplary MSCs illustrating additional details for event subscription and notification according to some aspects;
Figure 6 shows an exemplary MCS illustrating the handling of already subscribed-to SMF events in the network after insertion of an I-SMF according to some aspects;
Figure 7 shows an exemplary MCS illustrating another option for handling already subscribed-to SMF events in the network after insertion of an I-SMF according to some aspects;
Figure 8 shows an exemplary MSC for AMF relocation without I-SMF relocation according to some aspects;
Figure 9 shows an exemplary MSC for AMF relocation with I-SMF relocation according to some aspects;
Figure 10 shows an exemplary MSC illustrating a method for explicit event subscription according to some aspects;
Figure 11 shows an exemplary flowchart illustrating a method for managing wireless communications after inserting an I-SMF to communicate between an AMF and one or more SMFs from the I-SMF perspective according to some aspects;
Figure 12 shows an exemplary flowchart illustrating a method for managing wireless communications after inserting an I-SMF to communicate between an AMF and one or more SMFs from the AMF perspective according to some aspects;
Figure 13 shows an exemplary flowchart illustrating a method for managing wireless communications after inserting an I-SMF to communicate between an AMF and one or more SMFs from the I-SMF perspective according to some aspects; and
Figure 14 shows an exemplary flowchart illustrating a method for managing wireless communications after inserting an I-SMF to communicate between an AMF and one or more SMFs from the AMF perspective according to some aspects.

According to some aspects, methods and core network devices for managing wireless communications after inserting an I-SMF to communicate between an AMF and one or more SMFs are provided.

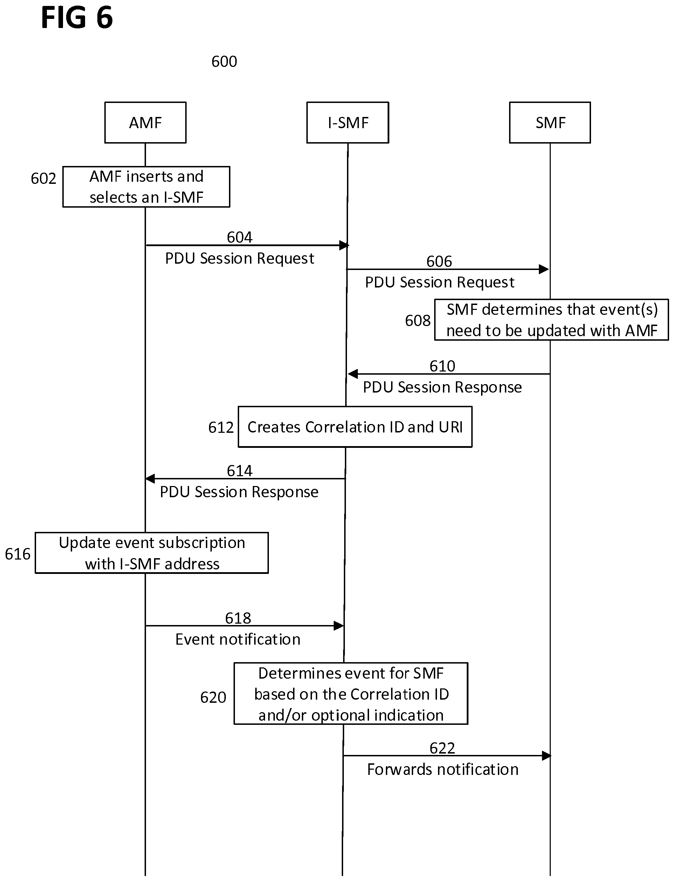

The invention is described with particular reference to figures 6, 7 and 9. The description of the remaining figures is provided for illustrative purposes for a better understanding of the invention. The following detailed description refers to the accompanying drawings that show, by way of illustration, specific details and aspects of this disclosure in which the invention may be practiced. Other aspects may be utilized and structural, logical, and electrical changes may be made without departing from the scope of the disclosure. The various aspects of this disclosure are not necessarily mutually exclusive, as some aspects of this disclosure can be combined with one or more other aspects of this disclosure to form new aspects.

The word "exemplary" is used herein to mean "serving as an example, instance, or illustration". Any embodiment or design described herein as "exemplary" is not necessarily to be construed as preferred or advantageous over other embodiments or designs.

The words "plurality" and "multiple" in the description or the claims expressly refer to a quantity greater than one. The terms "group (of)", "set (of)", "collection (of)", "series (of)", "sequence (of)", "grouping (of)", etc., and the like in the description or in the claims refer to a quantity equal to or greater than one, i.e. one or more. Any term expressed in plural form that does not expressly state "plurality" or "multiple" likewise refers to a quantity equal to or greater than one. The terms "proper subset", "reduced subset", and "lesser subset" refer to a subset of a set that is not equal to the set, i.e. a subset of a set that contains less elements than the set.

As used herein, "memory" are understood as a non-transitory computer-readable medium in which data or information can be stored for retrieval. References to "memory" included herein may thus be understood as referring to volatile or nonvolatile memory, including random access memory (RAM), read-only memory (ROM), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory.

The term "software" refers to any type of executable instruction, including firmware.

The terms "radio communication network" and "wireless network" as utilized herein encompasses both an access section of a network (e.g., a radio access network (RAN) section) and a core section of a network (e.g., a core network section). The term "radio idle mode" or "radio idle state" used herein in reference to a UE refers to a radio control state in which the UE is not allocated at least one communication channel of a mobile communication network. The term "radio connected mode" or "radio connected state" used in reference to a UE refers to a radio control state in which the UE is allocated at least one dedicated uplink communication channel of a radio communication network.

The term "processor," or similar terms such as "processing circuit" or the like, may be structurally realized as hardware components (e.g., as one or more digitally-configured hardware circuits or FPGAs), software-defined components (e.g., one or more processors configured to execute program code defining arithmetic, control, and I/O instructions (e.g., software and/or firmware) stored in a non-transitory computer-readable storage medium), or as a combination of hardware and software components. In some aspects, a processor may include one or more processors configured to retrieve and execute program code that defines control and processing logic for physical layer processing operations. In some aspects, a processor may execute processing functions with software via the execution of executable instructions. In some aspects, a processor may include one or more dedicated hardware circuits (e.g., ASICs, FPGAs, and other hardware) that are digitally configured to specific execute processing functions, where the one or more processors of the processor may offload certain processing tasks to these dedicated hardware circuits.

A "circuit" as used herein is understood as any kind of logic-implementing entity, which may include special-purpose hardware or a processor executing software. A circuit may thus be an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions which will be described below in further detail may also be understood as a "circuit". It is understood that any two (or more) of the circuits detailed herein may be realized as a single circuit with substantially equivalent functionality, and conversely that any single circuit detailed herein may be realized as two (or more) separate circuits with substantially equivalent functionality. Additionally, references to a "circuit" may refer to two or more circuits that collectively form a single circuit. The term "circuit arrangement" may refer to a single circuit, a collection of circuits, and/or an electronic device composed of one or more circuits.

The term "User Equipment" (UE) may be used to describe a mobile communication device configured to operate in a wireless network. Other terms, such as "terminal device," may be used interchangeably with UE. Examples of such equipment include mobile phones, smart phones, laptops, tablets, wearable devices, Internet of Things (IoT) devices, etc.

The term "network access node" as utilized herein refers to a network-side device that provides a radio access network with which terminal devices can connect and exchange information with a core network and/or external data networks through the network access node. "Network access nodes" can include any type of base station or access point, including macro base stations, micro base stations, NodeBs, evolved NodeBs (eNBs), gNodeBs (gNBs), Next Generation - Radio Access Network (NG-RAN), Home base stations, Remote Radio Heads (RRHs), relay points, Wi-Fi/WLAN Access Points (APs), Bluetooth master devices, UEs acting as network access nodes, and any other electronic device capable of network-side wireless communications, including both immobile and mobile devices.

Unless explicitly specified, the term "transmit" encompasses both direct (point-to-point) and indirect transmission (via one or more intermediary points). Similarly, the term "receive" encompasses both direct and indirect reception. Furthermore, the terms "transmit", "receive", "communicate", and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e. unidirectional or bidirectional communication in one or both of the incoming and outgoing directions. The term "calculate" encompass both 'direct' calculations via a mathematical expression/formula/relationship and 'indirect' calculations via lookup or hash tables and other array indexing or searching operations.

Various examples corresponding to aspects of this disclosure are described below:
In the following, various aspects of the examples will be described in more detail.

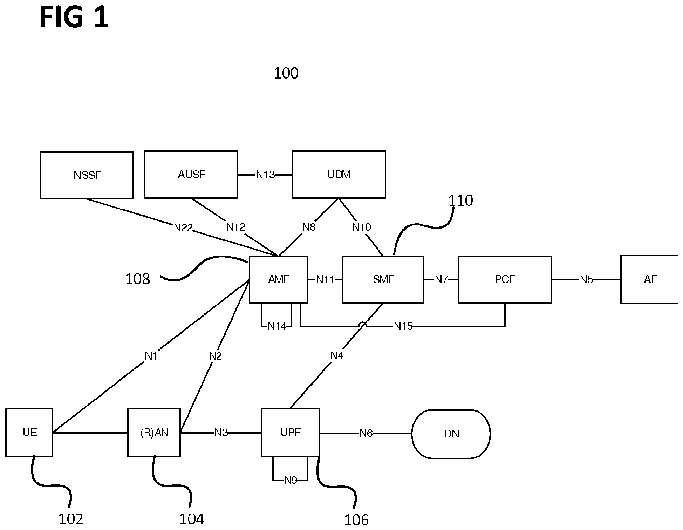

Figure 1 shows an exemplary core network architecture 100 prior to I-SMF insertion according to some aspects.

The NFs shown in Figure 1 include the Network Slice Selection Function (NSSF) which is responsible for selecting of network slice instances to serve the UE, determining the allowed Network Slice Selection Assistance Information (NSSAI), and determining the AMF set to serve the UE; the Authentication Server Function (ASF) which acts as an authentication server; the Unified Data Management (UDM) function which generates/shares Authentication and Key Agreement (AKA) credentials, performs user identification, performs access authorization, and performs subscription management; the Access and Mobility Management Function (AMF) which supports termination of non-access stratum (NAS) signaling, NAS ciphering and integrity protection, connection management, mobility management, registration management, access authentication and authentication, and security context management; the Session Management Function (SMF) which supports session management (including session establishment, modification, and release), UE IP address allocation & management, Dynamic Host Configuration Protocol (DHCP) functions, termination of NAS signaling related to session management, downlink (DL) data notification, and traffic steering configuration for user plane function (UPF) for proper traffic routing; the Policy Control Function (PCF) which supports unified policy framework, provides policy rules to control plane functions, and supports access subscription information for policy decisions in the unified data repository (UDR); the Application Function (AF) which supports application influence on traffic routing, access of the Network Exposure Function (NEF), and interaction with the policy framework for policy control; and the User Plane Function (UPF) which supports packet routing & forwarding, packet inspection, Quality of Service (QoS) handling, acts as external PDU session point of interconnect to the Data Network (DN), and is an anchor point for intra- & inter- Radio Access technology (RAT) mobility.

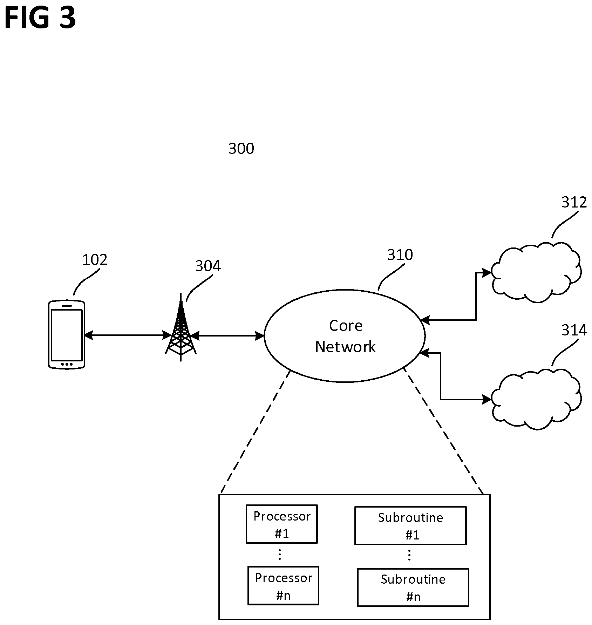

From Figure 1, the UE 110, the (radio) access network ((R)AN) 104, the UPF 106, the AMF 108, and the SMF 110 are of specific significance to the subject matter disclosed herein. The (R)AN 104 is the interface between the UE and the network and may be represented by a network access node such as a gNB, for example. Also shown in Figure 3 are the reference points/interfaces between the various NFs (e.g. the N11 interface between the AMF 108 and the SMF 110).

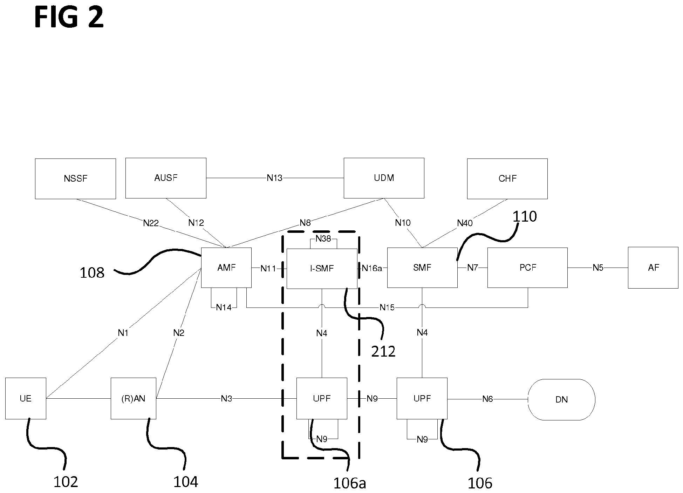

Figure 2 shows an exemplary core network architecture 200 after the intermediate SMF (I-SMF) insertion according to some aspects. The I-SMF 212 is an SMF that is inserted, change, or removed to a PDU session as needed to control UPF(s) which cannot be controlled by the original SMF because the UPF(s) belong to a different SMF service area. The reference point/interface between the I-SMF 212 and the SMF 110 is denoted with the interface N16a and the interfaces between the I-SMFs are denoted as N38.

When the SMF 110 cannot control the UPF 106 terminating the N3 interface used by a PDU Session and the Session and Service Continuity (SSC) mode 2/3 procedures are not applied to the PDU Session, the I-SMF 212 is inserted between the SMF 110 and the AMF 108. The I-SMF 212 has a N11 interface with the AMF 108 and an N16a interface with the SMF 110 and is responsible of controlling the UPF(s) 106a that the SMF cannot directly control. The exchange of the session management context and forwarding tunnel information, if needed, are interacted between the two SMFs 212, 110 directly without involvement of AMF 108. Depending on scenario, a PDU Session in a non-roaming case or local breakout is either served by a single SMF 110 or served by an SMF 110 and an I-SMF 212. When a PDU Session is served by both an SMF 110 and an I-SMF 212, the SMF 110 is the NF instance that has the interfaces towards the PCF and the charging function.

The Local Area Data Network (LADN) service area and the LADN Data Network Name (DNN) are configured in the AMF on a per DN bases, i.e. for different UEs accessing the same LADN. The configured LADN service area is the same regardless of other factors, e.g. UE's registration area or UE subscription. The LADN information is provided by the AMF to the UE during the Registration procedure or UE Configuration Update procedure. For each LADN DNN configured in the AMF, the corresponding LADN service area information includes a set of Tracking Areas that belong to the Registration Area than the AMF assigns to the UE (i.e. the intersection of the LADN service area and the assigned Registration Area). The AMF does not create the Registration Area on the basis of the availability of LADNs.

The SMF supporting a DNN is configured with information about whether this DNN is a LADN DNN or not.

Based on the notification about the UE presence in LADN service area notified by AMF (i.e. IN, OUT, or UNKNOWN), the SMF takes actions as follows based on operator's policy. When SMF is informed that the UE presence in a LADN service area is OUT, the SMF shall: release the PDU Session immediately; or deactivate the user plane connection for the PDU Session with maintaining the PDU Session and ensure the Data Notification is disabled and the SMF may release the PDU Session if the SMF is not informed that the UE moves into the LADN service area after a period. When SMF is informed that the UE presence a LADN service area is IN, the SMF shall: ensure that Data Notification is enabled; or trigger the Network triggered Service Request procedure for a LADN PDU Session to active the UP connection when the SMF receives downlink data or Data Notification from the UPF. When the SMF is informed that the UE presence in a LADN service area is UNKNOWN, the SMF may ensure that Data Notification is enabled; or trigger the Network triggered Service Request procedure for a LADN PDU Session to active the UP connection when the SMF receives downlink data or Data Notification from the UPF.

The AMF provides the UE mobility related event reporting to NF that has been authorized to subscribe to the UE mobility event reporting service. Any NF service consumer such as SMF, PCF or NEF that wants to be reported on the UE location is able to subscribe to the UE mobility event notification service to the AMF with a number of parameters. A first parameter may be an Event Reporting type, which specifies what to be reported on UE mobility (e.g. UE location, UE mobility on Area of Interest). Another parameter may be Area of Interest which specifies a geographical area within 3GPP system e.g. TA, list of cells, RAN node ID, LADN DNN. Another parameter may be an Event reporting information which specifies event reporting mode, number of reports, maximum duration of reporting, event reporting condition (e.g. moved to specific area). Another parameter may be a Notification address which includes an endpoint address of NF consumer (e.g. SMF, PCF, and/or NEF). Another parameter may be a Target of event which includes information about the specific UE, a group of UEs, or any UE.

When the AMF is changed, the subscription of mobility event is transferred from the old AMF. The new AMF may decide not to notify the SMF with the current status related to the subscription of mobility event if the new AMF determines that, based on MM Context of the UE, the event is reported by the old AMF. The NF consumer does not need to subscribe for the events once again with the new AMF after the UE is successfully registered with the new AMF. The NF consumer subscribes to the event notification by invoking "Namf_EventExposure" to the AMF. The AMF allocates a Subscription Correlation ID for the subscription and responds to the consumer NF with the Subscription Correlation ID. The Subscription Correlation ID is unique within the AMF Set.

When the UE is out of a LADN service area, the UE shall not request to activate UP connection of a PDU Session for this LADN DNN; shall not establish/modify a PDU Session for this LADN DNN (except for PS Data Off status change reporting for an established PDU Session); and/or need not release any existing PDU Session for this LADN DNN unless UE receives explicit SM PDU Session Release Request message from the network. When UE presence in LADN service area notified by AMF (i.e. IN, OUT, or UNKNOWN), e.g. when SMF is informed that the UE presence in a LADN service area is OUT, the SMF will release the PDU Session immediately; or deactivate the user plane connection for the PDU Session with maintaining the PDU Session and ensure the Data Notification is disabled and the SMF may release the PDU Session if the SMF is not informed that the UE moves into the LADN service area after a period.

The AMF 108 is responsible for detecting when to add or change or remove an I-SMF 212 for a PDU Session. To do so, for example, the AMF 108 gets from information from the NF repository function (NRF) about the service area of SMF(s) or local configured in the AMF e.g. by O&M system. The NRF may be accessible by at least one of the AMF and the SMFs. During mobility events such as Hand-Over or AMF change, if the service area of the SMF 110 does not include the new UE location, then the AMF 108 selects and inserts an I-SMF 212 which can serve the UE 102 location and the S-NSSAI. If the AMF 108 detects that an I-SMF 212 is no longer needed, it removes the I-SMF 212 and interfaces directly with the SMF 110 of the PDU Session. If the AMF 108 detects that the SMF 110 cannot serve the UE 102 location (e.g. due to mobility), then the AMF 108 selects a new I-SMF 212 serving the UE location. In case an existing I-SMF cannot serve the UE location, the AMF initiates an I-SMF relocation.

In PDU Session Establishment in non-roaming and roaming with local break out scenarios, if the AMF 108 cannot select an SMF 110 with a Service Area supporting the current UE location for the selected DNN, S-NSSAI etc., the AMF 108 selects an SMF 110 for the selected DNN, S-NSSAI and, in addition, selects an I-SMF 212 serving the UE location. During the lifetime of a PDU Session, the AMF 108 selects a new I-SMF if it determines that neither the current SMF nor the current I-SMF (if any) can serve the UE location. Even after insertion of the I-SMF 212, the SMF 110 still serves as the anchor for a PDU session.

When receiving PDU Session Establishment with the LADN DNN or a Service Request for the established PDU Session corresponding to the LADN, the AMF determines UE presence in the LADN service area and forwards it to the SMF if the requested DNN is configured at the AMF as a LADN DNN. When receiving the SM request corresponding to an LADN from the AMF, the SMF determines whether the UE is inside the LADN service area based on the indication (i.e. UE Presence in LADN service area) received from the AMF. If the SMF does not receive the indication, the SMF considers that the UE is outside of the LADN service area. The SMF will then reject the request if the UE is outside of the LADN service area. When the SMF receives a request for PDU Session Establishment with the LADN DNN, it shall subscribe to "UE mobility event notification" for reporting UE presence in Area of Interest by providing LADN DNN to the AMF. For example, it may be useful that if a UE moved out of LADN Service area during IDLE mode, then the SMF releases the PDU Session that LADN.

Figure 3 shows an exemplary network configuration 300 where a network access node 304 (which represents the (R)AN shown in the previous figures) interfaces with the core network 310, which may be, for example, a cellular core network, according to some aspects. Core network 310 may provide a variety of functions to manage operation of radio communication network 300, such as data routing, authenticating and managing users/subscribers, interfacing with external networks, and various other network control tasks performed by the NFs shown in Figures 1 and 2. Core network 310 may therefore provide an infrastructure to route data between UE 102 and various external networks such as data network 312 and data network 314. UE 102 may thus rely on the radio access network (RAN) provided by network access node 110 to wirelessly transmit and receive data with network access node 110, which may then provide the data to core network 310 for further routing to external locations such as data networks 312 and 314 (which may be packet data networks (PDNs)). UE 102 may therefore establish a data connection with data network 504 and/or data network 506 that relies on network access node 110 and core network 502 for data transfer and routing.

The NFs of the Core network 310 may be structurally realized as hardware (e.g., as one or more digitally-configured hardware circuits, such as ASICs, FPGAs, digital signal processors, etc.) shown as "Processor #1" to "Processor #n", where n is an integer greater than 1; as software (e.g., one or more processors configured to retrieve and execute program code that defines arithmetic, control, and/or I/O instructions and is stored in a non-transitory computer-readable storage medium) shown as "Subroutine #1" to "Subroutine #n", wherein n is an integer greater than 1; or as a mixed combination of hardware and software. Although not explicitly shown in Figure 3, the core network 310 may include a controller configured to control the various hardware and software processing components of the core network in accordance with physical layer control logic defined by the communications protocol for the relevant radio access technologies. In some aspects, in addition to a controller may include one or more digitally-configured hardware circuits that are individually configured to perform a particular processing function. The controller may therefore distribute processing tasks to the one or more digitally configured hardware circuits, which may perform their assigned processing function on input data and provide the controller with the resulting output data. Additionally, the components of the core network 310 may be provided with the appropriate interfaces so as to communication with the RAN via network access node 304 and data networks 312-314.

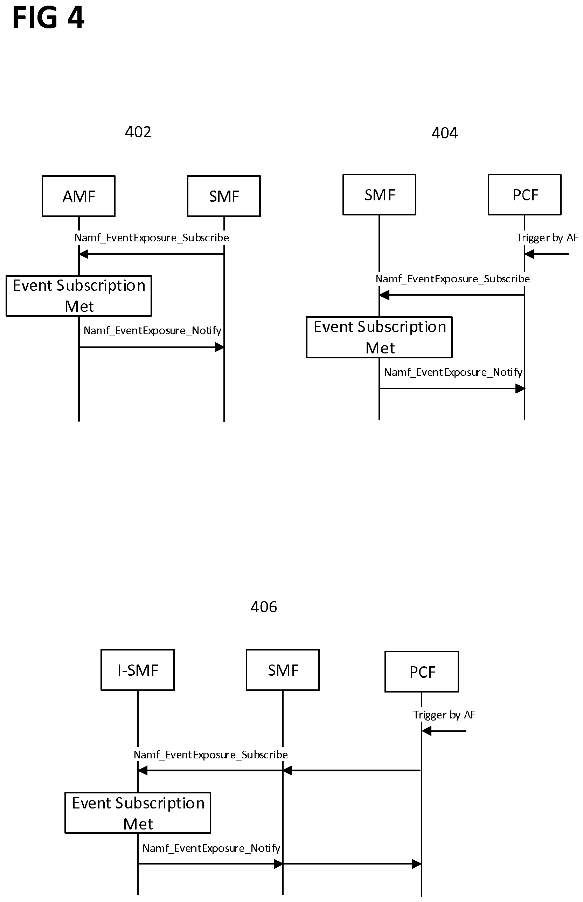

Figure 4 shows exemplary message sequence charts (MSCs) 402, 404, 406 according to some aspects. MSCs 402 and 404 are illustrative of protocols according to Release 15 of the 3GPP and MSC 406 is illustrative of protocols according to Release 16 in addition to Release 15. The Namf is a service based interface exhibited by the AMF and the Namf_EventExposure message from the AMF enables other NF consumers to subscribe or get notified of the mobility related events and statistics. Similarly, the SMF also provides for an Nsmf as a service based interface and an Nsmf_EventExposure service which exposes the events happening on the PDU sessions to the consumer NFs.

A mobility event may be related to the UE mobility, e.g. the UE may move in or out of a RAN node, cell ID, specific area, etc. The management and service related to mobility events is provided by the AMF. A PDU session event is related to service operations which allow other NFs to subscribe and receive notifications of events happening in PDU Sessions. The SMF provides services related to PDU session events.

For UE mobility event notifications, the AMF provides the UE mobility related event reporting to the NF that has been authorized to subscribe to the UE mobility event reporting service. Any NF service consumer, such as SMF, PCF, or NEF, which wants to be reported on the UE location is able to subscribe to the UE mobility event notification service to the AMF with a number of parameters, but are not limited to:
- A first parameter may be an Event reporting type that specifies what to be reported on UE mobility (e.g. UE location, UE mobility on Area of Interest).
- Another parameter may be an area of interest that specifies a geographical area within 3GPP system and is represented by a list of Tracking Areas, list of cells or list of (R)AN node identifiers. In the case of LADN, the event consumer (e.g. SMF) provides the LADN DNN to refer the LADN service area as the Area Of Interest. In the case of Presence Reporting Area (PRA), the event consumer (e.g. SMF or PCF) may provide an identifier for Area Of Interest to refer predefined area as the Area Of Interest.
- Another parameter may be an Event Reporting Information, including event reporting mode, number of reports, maximum duration of reporting, event reporting condition (e.g. when the target UE moved into a specified Area Of Interest). Another parameter may include a Notification address (i.e. Endpoint Address of NF service consumer to be notified to).
- Another parameter may include the target of event reporting that indicates a specific UE, a group of UE(s), or any UE (i.e. all UEs).

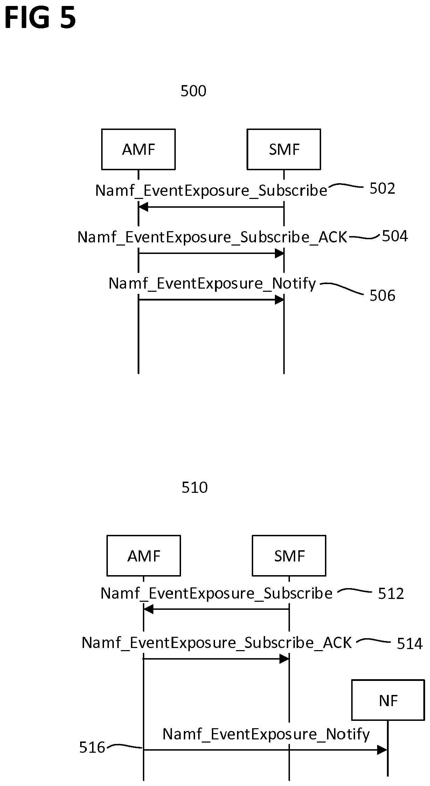

Figure 5 shows exemplary MSCs 500, 510 illustrating additional details for event subscription and notification according to some aspects.

In MSC 500, in the "Namf_EventExposure Subscribe" message 502, the SMF includes the "Notification Target Address (plus a Notification Correlation ID)," a "Notification Uniform Resource Identifier (URI)," and Event ID(s) to the AMF. The AMF response with a "Namf_EventExposure Subscribe _ACK" 504 which responds with an allocated "Subscription Correlation ID" for the subscription. In the "Namf_EventExposure Notify" message 506 from the AMF, the Notification Target Address (plus the Notification Correlation ID) indicates to the event receiving the NF the specific event notification subscription. For any future communication for this event, the "Subscription Correlation ID" is used as a reference. The "Subscription Correlation ID" is unique within the AMF set.

MSC 510 illustrates that it is also possible for the SMF to subscribe on behalf of other NFs (e.g. the PCF). The SMF includes the "Notification Target Address (plus a Notification Correlation ID)" of the other NFs and the "Notification Target Address (plus a Notification Correlation ID)" of itself, the "Notification URI," and Event ID(s) to the AMF in the Namf_EventExposureSubscribe message 512. The AMF allocates the "Subscription Correlation ID" and provides if the SMF in the "Namf_EventExposure Subscribe _ACK" 514. If the ID of the other NF is provided in 512, the AMF can directly notify the other NF of the event 516.

In UE mobility event notification, the AMF provides the UE mobility related event reporting to the NF that has been authorized to subscribe to the UE mobility event reporting service. Any NF service consumer, such as SMF, PCF, or NEF, that wants to be reported on the UE location is able to subscribe to the UE mobility event notification service to the AMF with one or more of the Event Reporting type, Area of Interest, Event reporting information, Notification address (e.g. Endpoint address of NF consumer (SMF, PCF and NEF)), or the Target of event (e.g. specific UE, a group of UEs or any UE). When the AMF is changed, the subscription of the mobility event is transferred from the old AMF. The new AMF may decide not to notify the SMF with the current status related to the subscription of mobility event if the new AMF determines that, based on MM Context of the UE, the event is reported by the old AMF. The NF consumers do not need to subscribe for the events once again with the new AMF after the UE is successfully registered with the new AMF. The NF consumer subscribes to the event notification by invoking "Namf_EventExposure" to the AMF. The AMF allocates a Subscription Correlation ID for the subscription and responds to the consumer NF with the Subscription Correlation ID. The Subscription Correlation ID is unique within the AMF Set.

The SMF may determine an Area of Interest, e.g. based on UPF Service Area, subscription by PCF for reporting UE presence in Presence Reporting Area, etc. For 3GPP access, the Area of Interest includes a list of Tracking Areas; cell identifiers; NG-RAN node identifiers; Presence Reporting Area ID(s) and optionally the elements for one or more of the Presence Reporting Areas, i.e. TAs and/or NG-RAN nodes; cell identifiers; and/or LADN DNN. For Non-3GPP access, the Area of Interest includes N3GPP tracking area information (TAI). The reason for subscription of a "UE mobility event notification" can be, for example, if a UE moves out of a specific area (e.g., LADN), thereby causing the SMF to release the PDU Session. The subscription may be maintained during the life of PDU Session, regardless of the UP activation state of PDU Session (e.g. whether UP connection of the PDU Session is activated or not).

Figure 6 shows an exemplary MCS 600 illustrating the handling of already subscribed-to SMF events in the network after insertion of an I-SMF according to some aspects. MSC 600 shows handling of the case in which an already subscribed to SMF even by NFs of the core network in 5G.

In 602, the AMF decides to insert an I-SMF and select the I-SMF via the NRF. This may be performed, for example, due to UE mobility. In 604, the AMF sends the PDU Session request with the SMF address and other relevant parameters to the I-SMF. It is appreciated that for purposes of simplifying this explanation, a generic name is given for this message, but it is appreciated that this message may be mapped to the appropriate Service-Based Interface (SBI) message name, e.g. "Nsmf_PDUSession_CreateSMContext Request or Response." In 606, the I-SMF understands that it needs to establish and get the SM context from the SMF, so the I-SMF forwards the PDU connect request, which is received in 604, to the SMF. In 608, based on the I-SMF, the SMF identifies the PDU Session (for example, from the SM context ID) and realizes that it has subscribed for the event notification from the AMF and determines that it still needs to receive event notifications from the AMF.

In 610, the SMF sends the SM context with the PDU connect response along with the event notification information, e.g. Subscription Correlation ID, URI, and/or Notification Correlation ID. The SMF may also optionally include an indication to update the event subscription to the I-SMF to prompt the I-SMF to subscribe and/or update its event subscription with the AMF in order to notify the event to the I-SMF.

In 612, based on the response from the SMF, the I-SMF creates a correlation ID and URI for each of the subscribed events. In 614, the I-SMF defines the "Notification Correlation ID" for the SMF event to the AMF, and forwards the request to the AMF. This may include the "Subscription Correlation ID" allocated to the SMF event subscription, "Notification Target Address (+ Notification Correlation ID) of I-SMF," and the "Notification URI."

In 616, based on the Subscription Correlation ID, the AMF identifies the SMF'S subscription and updates the event with the I-SMF address(es).

When the subscribed event occurs, in 618, the AMF notifies the I-SMF that the event has/is occurring with the Correlation ID. This may also include the optional indication that the event is for the SMF.

In 620, with the correlation ID and optional indication, the I-SMF understands that the event pertains to the SMF and forwards the notifications to the SMF in 622.

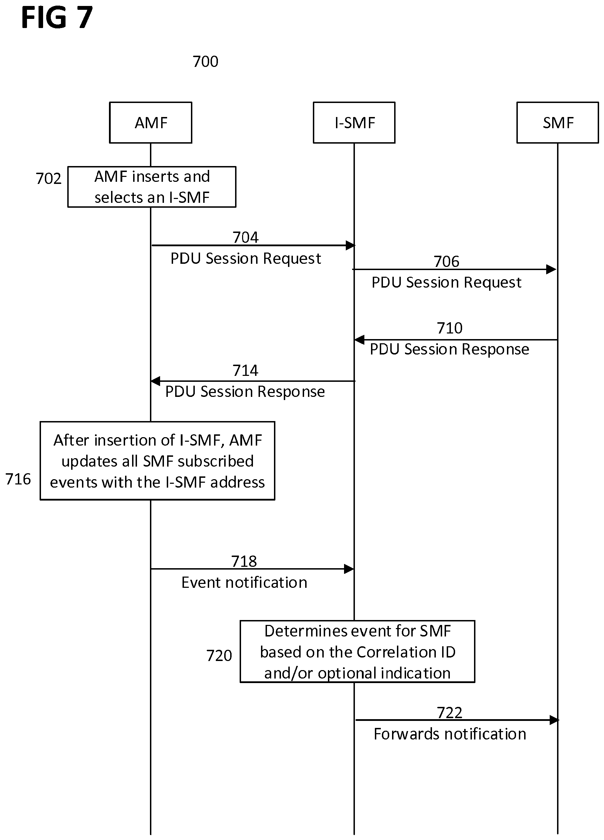

Figure 7 shows an exemplary MCS 700 illustrating another option for handling already subscribed-to SMF events in the network after insertion of an I-SMF according to some aspects. MSC 700 shows handling of the case in which an already subscribed to SMF even by NFs of the core network in 5G in a more AMF intelligent approach then the approach illustrated in Figure 6.

In 702, the AMF decides to insert an I-SMF and select the I-SMF e.g. via the NRF. This may be performed, for example, due to UE mobility. After I-SMF insertion, the AMF updates all the subscribed events for one or more SMFs with the appropriate I-SMF address 716. The AMF may, for example, determine which of the SMFs no longer provide valid service for one or more UPF services, and, accordingly, map these SMFs to at least one of the inserted I-SMFs. In 716, based on the determination from the AMF after insertion of the I-SMF, the AMF updates all the subscribed events for the affects SMFs with the I-SMF address. In doing so, for example, the AMF may update the address for the SMF for the subscribed events to an address for the I-SMF.

In 704-714, the messages are similar to messages 604, 606, 610 and 614 described in Figure 6, however, the contents of the PDU Session response 710 do not include all the information described in 610 for Figure 6, and instead only need to include parameters for the I-SMF can establish the connection with the respective UPF. In other words, because the AMF is able to determine the mapping of the SMFs to the inserted I-SMF on its own, the correlation ID may not be needed.

In 716, based on the determination from the AMF after insertion of the I-SMF, the AMF updates all the subscribed events for the affects SMFs with the I-SMF address. This may include, for example, a "Notification Correlation ID" for the SMF event, "Subscription Correlation ID, Notification Target Address (+ Notification Correlation ID) of I-SMF" and the "Notification URI."

When the subscribed event occurs, in 718, the AMF notifies the I-SMF that the event has/is occurring with the Correlation ID. This may also include the optional indication that the event is for the SMF, e.g. maybe with a SMF address.

In 720, with the correlation ID and optional indication, the I-SMF understands that the event pertains to the SMF and forwards the notifications to the SMF in 722 so that the SMF may know the event details.

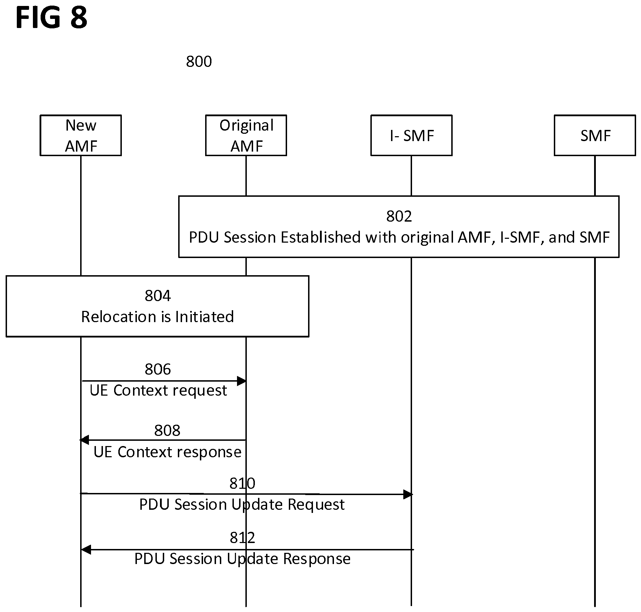

Figure 8 shows an exemplary MSC 800 for AMF relocation without I-SMF relocation according to some aspects. After establishing the PDU Session with the original AMF, I-SMF, and SMF (e.g. according to MSC 600 or 700) in 802, relocation of the AMF may be initiated 804. The relocation may be initiated, for example, due to mobility of the UE, and the initiation may be triggered by the RAN. The New AMF sends the UE context request to the original AMF to obtain the PDU Session context in 806. In 808, the original AMF responds and includes the I-SMF address and event subscription details (e.g. SMF even subscription details via the I-SMF). Therefore, the new AMF can now notify the SMF via the I-SMF. In 812-812, the new AMF established an interface with the I-SMF using the address received in context from the original AMF.

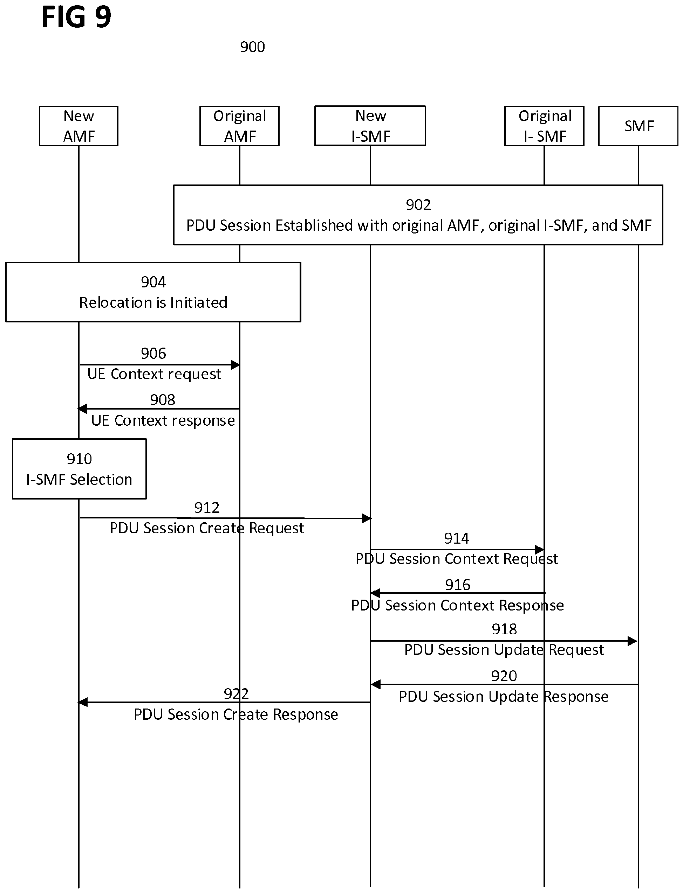

Figure 9 shows an exemplary MSC 900 for AMF relocation with I-SMF relocation according to some aspects. After establishing the PDU Session with the original AMF, original I-SMF, and SMF (e.g. according to MSC 600 or 700) in 902, relocation of the AMF may be initiated 904. The relocation may be initiated, for example, due to mobility of the UE, and the initiation may be triggered by the RAN. The New AMF sends the UE context request to the original AMF to obtain the PDU Session context in 906. In 908, the original AMF responds and includes the I-SMF address(es) and event subscription details (e.g. SMF even subscription details via the I-SMF). In 910, after receiving the UE context, the new AMF determines the need to select the new I-SMF and selects it, e.g. via the NRF. Since the "Subscription Correlation ID" is unique within the AMF/AMF Set, during AMF relocation, the "Subscription Correlation ID" change is notified to the SMF(s) which triggered the particular event subscription. For example, in this case, the new AMF updates the I-SMF and the I-SMF updates the SMF with the new "Subscription Correlation ID," which is received from the new AMF. After the selection, in 912, the new AMF sends the PDU Session Create Request to the new I-SMF, wherein the request includes the original I-SMF and SMF addresses. In 914-16, the new I-SMF receives the context from the original I-SMF. This may include event subscription details by the SMF and optionally may include the original I-SMF information to indicate that the new I-SMF needs to subscribe to the relevant SMF events or original I-SMF events. In addition, the I-SMF can also include if there are any original I-SMF subscribed events, e.g. I-SMF itself subscribed for the AMF events which needs to transfer to the new I-SMF.

In 918-920, the new I-SMF established the interface with the SMF based on the context and information received from the old I-SMF and the AMF. During the response in 920, the SMF may also optionally indicate that the new I-SMF needs to subscribe for the events and provides the relevant parameter(s) if any are required.

In 922, based on the information received from original I-SMF and SMF, the new I-SMF allocates the Correlation ID for each of the SMF events and sends this to the new AMF. Based on the Correlation IDs (i.e. ID of the new I-SMF and SMF ID (e.g. Subscription Correlation ID), the new AMF updates the existing SMF events (received from old AMF) with the new I-SMF details. It should be noted that the new I-SMF allocates the Correlation ID for the SMF and another Correlation ID for the event for itself if the original I-SMF informed the new I-SMF that it is subscribed for the event or would like to transfer the subscribed events.

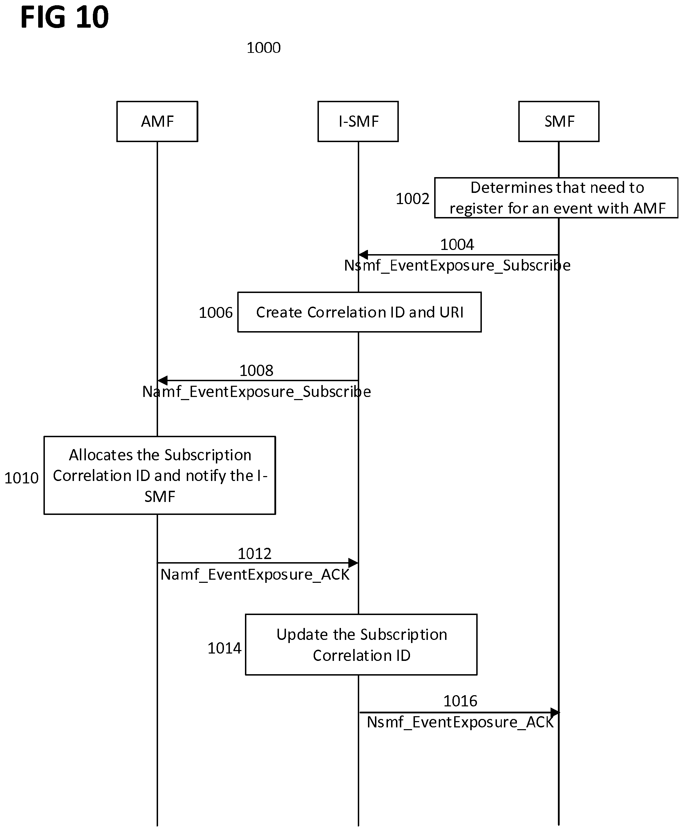

Figure 10 shows an exemplary MSC 1000 illustrating a method for explicit event subscription and/or an update according to some aspects.

After I-SMF insertion, (e.g. after some point) the SMF determines that it needs to subscribe for events from the AMF 1002. For example, this may be triggered by another NF, such as the PCF or AF or triggered by SMF service itself. Accordingly, the SMF allocates the Notification Correlation ID and URI and sends these parameters to the I-SMF. Optionally, an indication to the I-SMF that the SMF needs subscribe for the event with the AMF may be included. In 1004, the SMF sends a message with this information to the I-SMF in the Nsmf_EventExposure_Subscribe message. In 1006, based on the message in 1004, the I-SMF creates the Correlation ID and URI for the event. In 1008, the I-SMF sends the subscription notification to the AMF along with the I-SMF and SMF'S correlation IDs and addresses.

Based on the subscription request, the AMF allocates the subscription Correlation ID(s) and updates its list with the provided I-SMF and SMF parameters in 1010. In 1012-1014, the AMF notifies the I-SMF of the allocated subscription Correlation ID, and the I-SMF updates its list with the subscription Correlation ID. In 1016, the I-SMF forwards the subscription Correlation ID to the SMF. Thereafter, in the future, for any updates to this event, the subscription Correlation ID is used between the consumers/NFs.

The SMF can explicitly trigger an update using a procedure similar to that shown in MSC 1000. In this scenario, the procedure is largely similar to MSC 1000 except that the SMF provides the Subscription Correlation ID (i.e. received from the AMF before I-SMF insertion) and optionally an indication for an event subscription with an AMF to the I-SMF and the I-SMF allocates the Notification Correlation ID and updates with the AMF with its address and allocated Correlation ID.

In other words, the subscription request may be for a first time subscription of an event from the SMF or it may be an update of an existing event subscription. In the case that it is the SMF's first time subscription of an event, the SMF will not have the Subscription Correlation ID yet. However, if the SMF already registered with the AMF, it may now only need to update the Subscription and the I-SMF will update its address with the AMF.

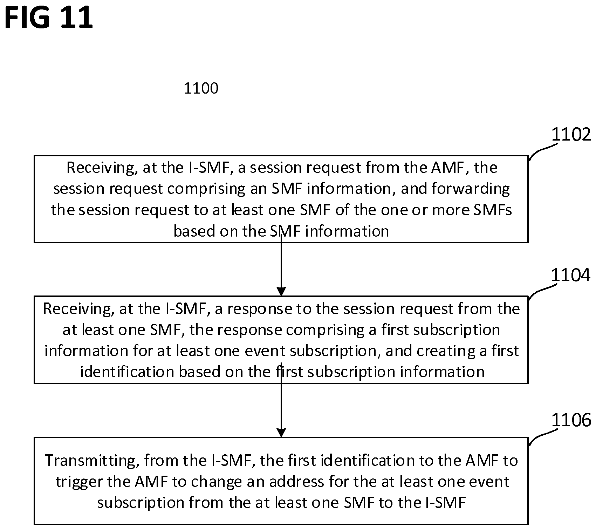

Figure 11 shows an exemplary flowchart illustrating a method for managing wireless communications after inserting an I-SMF to communicate between an AMF and one or more SMFs from the I-SMF perspective according to some aspects.

The method includes receiving, at the I-SMF, a session request from the AMF, the session request including an SMF information, and forwarding the session request to at least one SMF of the one or more SMFs based on the SMF information 1102; receiving, at the I-SMF, a response to the session request from the at least one SMF, the response including a first subscription information for at least one event subscription, and creating a first identification based on the first subscription information 1104; and transmitting, from the I-SMF, the first identification to the AMF to trigger the AMF to change an address for the at least one event subscription from the at least one SMF to the I-SMF 1106.

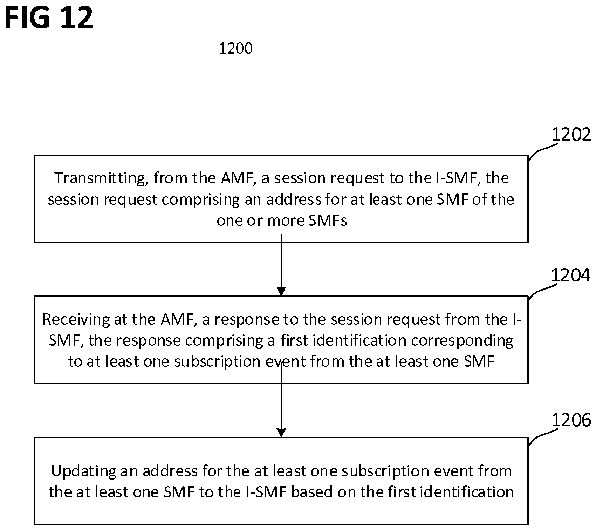

Figure 12 shows an exemplary flowchart illustrating a method for managing wireless communications after inserting an I-SMF to communicate between an AMF and one or more SMFs from the AMF perspective according to some aspects.

The method includes transmitting, from the AMF, a session request to the I-SMF, the session request including an address for at least one SMF of the one or more SMFs 1202; receiving at the AMF, a response to the session request from the I-SMF, the response including a first identification corresponding to at least one subscription event from the at least one SMF 1204; and updating an address for the at least one subscription event from the at least one SMF to the I-SMF based on the first identification 1206.

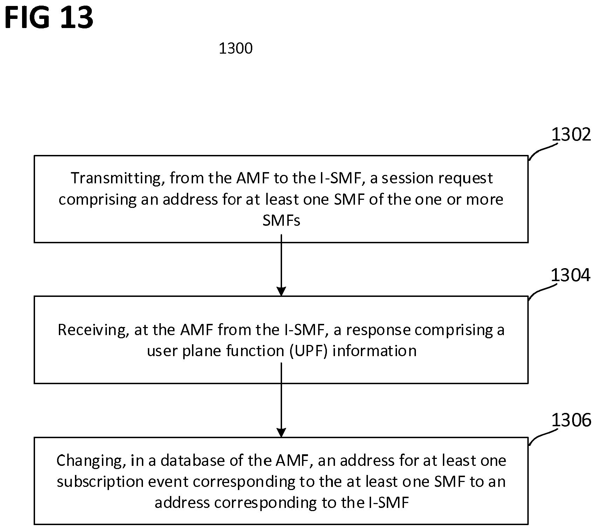

Figure 13 shows an exemplary flowchart illustrating a method for managing wireless communications after inserting an I-SMF to communicate between an AMF and one or more SMFs from the I-SMF perspective according to some aspects.

The method includes transmitting, from the AMF to the I-SMF, a session request including an address for at least one SMF of the one or more SMFs 1302; receiving, at the AMF from the I-SMF, a response including a user plane function (UPF) information 1304; and changing, in a database of the AMF, an address for at least one subscription event corresponding to the at least one SMF to an address corresponding to the I-SMF 1306.

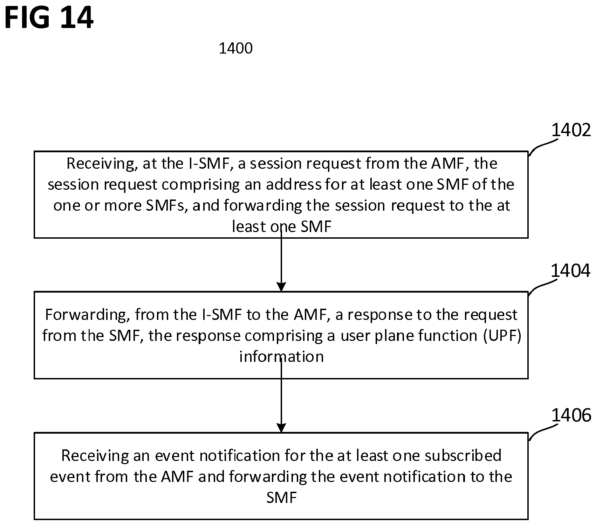

Figure 14 shows an exemplary flowchart illustrating a method for managing wireless communications after inserting an I-SMF to communicate between an AMF and one or more SMFs from the AMF perspective according to some aspects.

The method includes receiving, at the I-SMF, a session request from the AMF, the session request including an address for at least one SMF of the one or more SMFs, and forwarding the session request to the at least one SMF 1402; forwarding, from the I-SMF to the AMF, a response to the request from the SMF, the response including a user plane function (UPF) information 1404; and receiving an event notification for the at least one subscribed event from the AMF and forwarding the event notification to the SMF 1406.

It is appreciated that implementations of methods detailed herein are demonstrative in nature, and are thus understood as capable of being implemented in a corresponding device, which may include one or more processor and/or one or more software packages. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

## Claims

1. A method for managing wireless communications after inserting an intermediate-session management function, I-SMF, to communicate between an access and mobility management function, AMF, and one or more session management functions, SMF, the method comprising:
receiving, at the I-SMF, a session request (604) from the AMF, the session request comprising an SMF information, and forwarding (606) the session request to at least one SMF of the one or more SMFs based on the SMF information;
receiving, at the I-SMF, a response (610) to the session request from the at least one SMF, the response comprising a first subscription information for at least one event subscription, and creating a first identification based on the first subscription information; and
transmitting (614), from the I-SMF, the first identification to the AMF to trigger the AMF to change an address for the at least one event subscription from the at least one SMF to the I-SMF.

2. The method of claim 1, wherein the event subscription comprises one or more of a subscription correlation ID, Uniform Resource Identifier, URI, and/or a Notification Correlation ID.

3. The method of any one of claims 1-2, wherein the response comprises an indication to update the at least one event subscription to the I-SMF.

4. The method of any one of claims 1-3, further comprising adding a new AMF, and relocating a session with the I-SMF from the AMF to the new AMF, wherein the new AMF provides at least one of the I-SMF and/or the SMF with an updated first identification based on the first subscription information.

5. The method of any one of claims 1-4, wherein the SMF provides an event exposure service, wherein the event exposure service exposes events happening on Protocol Data Unit sessions to consumer Network Functions.

6. The method of any one of claims 1 to 5, further comprising
receiving, at the I-SMF from a new I-SMF a session context request (914);
responding from the I-SMF to the new I-SMF with a session context response (916), wherein the session context response comprises the context from the original I-SMF which comprises event subscription details by the SMF;
establishing by the new I-SMF an interface with the SMF based on the context from the original I-SMF (918, 920) and the AMF.

7. An intermediate-session management function device for managing wireless communications after inserting an intermediate-session management function, I-SMF, to communicate between an access and mobility management function, AMF, and one or more session management functions, SMF, the intermediate-session management function device comprising one or more processors configured to:
receive, at the I-SMF, a session request from the AMF, the session request comprising an SMF information, and forwarding the session request to at least one SMF of the one or more SMFs based on the SMF information;
receive, at the I-SMF, a response to the session request from the at least one SMF, the response comprising a first subscription information for at least one event subscription, and creating a first identification based on the first subscription information; and
transmit, from the I-SMF, the first identification to the AMF to trigger the AMF to change an address for the at least one event subscription from the at least one SMF to the I-SMF.

8. A method for managing wireless communications after inserting an intermediate-session management function I-SMF to communicate between an access and mobility management function AMF and one or more session management functions SMFs, the method comprising:
transmitting, from the AMF, a session request (604) to the I-SMF, the session request comprising an address for at least one SMF of the one or more SMFs;
receiving at the AMF, a response to the session request from the I-SMF (614), the response comprising a first identification corresponding to at least one event subscription from the at least one SMF; and
updating by the AMF an address for the at least one event subscription from the at least one SMF to the I-SMF based on the first identification.

9. An access and mobility management function device for managing wireless communications after inserting an intermediate-session management function, I-SMF, to communicate between the access and mobility management function device, AMF, and one or more session management functions, SMF, the access and mobility management function device comprising one or more processors configured to:
transmit, from the AMF, a session request to the I-SMF, the session request comprising an address for at least one SMF of the one or more SMFs;
receive at the AMF, a response to the session request from the I-SMF, the response comprising a first identification corresponding to at least one event subscription from the at least one SMF; and
update by the AMF an address for the at least one event subscription from the at least one SMF to the I-SMF based on the first identification.

10. A method for managing wireless communications after inserting an intermediate-session management function, I-SMF, to communicate between an access and mobility management function, AMF, and one or more session management functions, SMFs, the method comprising:
transmitting (704), from the AMF to the I-SMF, a session request comprising an address for at least one SMF of the one or more SMFs;
receiving (714), at the AMF from the I-SMF, a response comprising a user plane function, UPF, information; and
changing (716), in a database of the AMF, an address for at least one event subscription corresponding to the at least one SMF to an address corresponding to the I-SMF.

11. An access and mobility management function device for managing wireless communications after inserting an intermediate-session management function, I-SMF, to communicate between the access and mobility management function device, AMF, and one or more session management functions, SMFs, the access and mobility management function device comprising one or more processors configured to:
transmit (704), from the AMF to the I-SMF, a session request comprising an address for at least one SMF of the one or more SMFs ;
receive (714), at the AMF from the I-SMF, a response comprising a user plane function, UPF, information; and
change (716), in a database of the AMF, an address for at least one event subscription corresponding to the at least one SMF to an address corresponding to the I-SMF.

## Patentansprüche

1. Ein Verfahren zum Steuern drahtloser Kommunikationen nach dem Einfügen einer Zwischensitzungssteuerungsfunktion, I-SMF, um zwischen einer Zugriffs- und Mobilitätssteuerungsfunktion, AMF, und einer oder mehrerer Sitzungssteuerungsfunktionen, SMF, zu kommunizieren, das Verfahren umfassend:
Empfangen, an der 1-SMF, einer Sitzungsanfrage (604) von der AMF, wobei die Sitzungsanfrage eine SMF-Information umfasst, und weiterleiten (606) der Sitzungsanfrage an mindestens eine SMF der einen oder mehreren SMF basierend auf der SMF-Information;
Empfangen, an der 1-SMF, einer Antwort (610) auf die Sitzungsanfrage von der mindestens einen SMF, wobei die Antwort eine erste Subskriptionsinformation für mindestens eine Ereignissubskription umfasst, und erzeugen einer ersten Identifikation basierend auf der ersten Subskriptionsinformation; und
Übermitteln (614), von der 1-SMF, der ersten Identifikation an die AMF, um die AMF zu veranlassen, eine Adresse für die mindestens eine Ereignissubskription von der mindestens einen SMF auf die 1-SMF zu ändern.

2. Das Verfahren gemäß Anspruch 1, wobei die Ereignissubskription eines oder mehr aus einer Subskriptionskorrelations-ID, einem einheitlichen Bezeichner für Ressourcen, URI, und/oder eine Mitteilungskorrelations-ID umfasst.

3. Das Verfahren gemäß einem der Ansprüche 1-2, wobei die Antwort eine Angabe, die mindestens eine Ereignissubskription auf die I-SMF zu aktualisieren, umfasst.

4. Das Verfahren gemäß einem der Ansprüche 1-3, weiter umfassend das Hinzufügen einer neuen AMF und verlegen einer Sitzung mit der 1-SMF von der AMF zu der neuen AMF, wobei die neue AMF mindestens eines aus der I-SMF und/oder der SMF mit einer aktualisierten ersten Identifikation basierend auf der ersten Subskriptionsinformation bereitstellt.

5. Das Verfahren gemäß einem der Ansprüche 1-4, wobei die SMF einen Ereignisoffenbarungsdienst bereitstellt, wobei der Ereignisoffenbarungsdienst Ereignisse, die in Protokoll-Daten-Einheits-Sitzungen eintreten gegenüber Verbraucher-Netzwerk-Funktionen offenbart.

6. Das Verfahren gemäß einem der Ansprüche 1 bis 5, weiter umfassend
Empfangen, an der 1-SMF von einer neuen 1-SMF, einer Sitzungskontextanfrage (914);
Antworten von der 1-SMF an die neue 1-SMF mit einer Sitzungskontextantwort (916), wobei die Sitzungskontextantwort den Kontext von der ursprünglichen I-SMF umfasst, der Ereignissubskriptionsdetails durch die SMF umfasst;
Etablieren durch die neue I-SMF einer Schnittstelle mit der SMF basierend auf dem Kontext von der ursprünglichen 1-SMF (918, 920) und der AMF.

7. Eine Zwischensitzungssteuerungsfunktionsvorrichtung zum Steuern drahtloser Kommunikationen nach dem Einfügen einer Zwischensitzungssteuerungsfunktion, I-SMF, um zwischen einer Zugriffs-und-Mobilitätssteuerungsfunktion, AMF, und einer oder mehrerer Sitzungssteuerungsfunktionen, SMF, zu kommunizieren, die Zwischensitzungssteuerungsfunktionsvorrichtung umfassend einen oder mehrere Prozessoren, die konfiguriert sind zum:
Empfangen, an der 1-SMF, einer Sitzungsanfrage von der AMF, wobei die Sitzungsanfrage eine SMF-Information umfasst, und weiterleiten der Sitzungsanfrage an mindestens eine SMF der einen oder mehreren SMF basierend auf der SMF-Information;
Empfangen, an der 1-SMF, einer Antwort auf die Sitzungsanfrage von der mindestens einen SMF, wobei die Antwort eine erste Subskriptionsinformation für mindestens eine Ereignissubskription umfasst, und erzeugen einer ersten Identifikation basierend auf der ersten Subskriptionsinformation; und
Übermitteln, von der I-SMF, der ersten Identifikation an die AMF, um die AMF zu veranlassen, eine Adresse für die mindestens eine Ereignissubskription von der mindestens einen SMF auf die 1-SMF zu ändern.

8. Ein Verfahren zum Steuern drahtloser Kommunikationen nach dem Einfügen einer Zwischensitzungssteuerungsfunktion 1-SMF, um zwischen einer Zugriffs- und Mobilitätssteuerungsfunktion AMF und einer oder mehrerer Sitzungssteuerungsfunktionen SMF zu kommunizieren, das Verfahren umfassend:
Übermitteln, von der AMF, einer Sitzungsanfrage (604) an die I-SMF, wobei die Sitzungsanfrage eine Adresse für mindestens eine SMF der einen oder mehreren SMF umfasst;
Empfangen, an der AMF, einer Antwort auf die Sitzungsanfrage von der 1-SMF (614), wobei die Antwort eine erste Identifikation, die mindestens einer Ereignissubskription von der mindestens einen SMF entspricht, umfasst; und
Aktualisieren, durch die AMF, einer Adresse für die mindestens eine Ereignissubskription von der mindestens einen SMF auf die I-SMF basierend auf der ersten Identifikation.

9. Eine Zugriffs- und Mobilitätssteuerungsfunktionsvorrichtung zum Steuern drahtloser Kommunikationen nach dem Einfügen einer Zwischensitzungssteuerungsfunktion, I-SMF, um zwischen der Zugriffs- und Mobilitätssteuerungsfunktionsvorrichtung, AMF, und einer oder mehrerer Sitzungssteuerungsfunktionen, SMF, zu kommunizieren, die Zugriffs- und Mobilitätssteuerungsfunktionsvorrichtung umfassend einen oder mehrere Prozessoren, die eingerichtet sind zum:
Übermitteln, von der AMF, einer Sitzungsanfrage an die I-SMF, wobei die Sitzungsanfrage eine Adresse für mindestens eine SMF der einen oder mehreren SMF umfasst;
Empfangen, an der AMF, einer Antwort auf die Sitzungsanfrage von der I-SMF, wobei die Antwort eine erste Identifikation, die mindestens einer Ereignissubskription von der mindestens einen SMF entspricht, umfasst; und
Aktualisieren, durch die AMF, einer Adresse für die mindestens eine Ereignissubskription von der mindestens einen SMF auf die I-SMF basierend auf der ersten Identifikation.

10. Ein Verfahren zum Steuern drahtloser Kommunikationen nach dem Einfügen einer Zwischensitzungssteuerungsfunktion 1-SMF, um zwischen einer Zugriffs- und Mobilitätssteuerungsfunktion, AMF, und einer oder mehrerer Sitzungssteuerungsfunktionen, SMF, zu kommunizieren, das Verfahren umfassend:
Übermitteln (704), von der AMF an die 1-SMF, einer Sitzungsanfrage, umfassend eine Adresse für mindestens eine SMF der einen oder mehreren SMF;
Empfangen (714), an der AMF von der 1-SMF, einer Antwort umfassend eine Nutzerebenenfunktions-, UPF, information; und
Ändern (716), in einer Datenbank der AMF, einer Adresse für mindestens eine Ereignissubskription entsprechend der mindestens einen SMF auf eine Adresse entsprechend der I-SMF.

11. Eine Zugriffs- und Mobilitätssteuerungsfunktionsvorrichtung zum Steuern drahtloser Kommunikationen nach dem Einfügen einer Zwischensitzungssteuerungsfunktion, I-SMF, um zwischen einer Zugriffs- und Mobilitätssteuerungsfunktionsvorrichtung, AMF, und einer oder mehrerer Sitzungssteuerungsfunktionen, SMF, zu kommunizieren, die Zugriffs- und Mobilitätssteuerungsfunktionsvorrichtung umfassend einen oder mehrere Prozessoren, die eingerichtet sind zum:
Übermitteln (704), von der AMF an die 1-SMF, einer Sitzungsanfrage, umfassend eine Adresse für mindestens eine SMF der einen oder mehreren SMF;
Empfangen (714), an der AMF von der 1-SMF, einer Antwort umfassend eine Nutzerebenenfunktions-, UPF, information; und
Ändern (716), in einer Datenbank der AMF, einer Adresse für mindestens eine Ereignissubskription entsprechend der mindestens einen SMF auf eine Adresse entsprechend der I-SMF.

## Revendications

1. Procédé de gestion de communications sans fil après l'insertion d'une fonction de gestion de session intermédiaire, I-SMF, pour communiquer entre une fonction de gestion d'accès et de mobilité, AMF, et une ou plusieurs fonctions de gestion de session, SMF, le procédé comprenant :
la réception, au niveau de l'I-SMF, d'une demande de session (604) depuis l'AMF, la demande de session comprenant une information SMF, et le transfert (606) de la demande de session à au moins une SMF parmi ladite une ou lesdites plusieurs SMF sur la base de l'information SMF ;
la réception, au niveau de l'I-SMF, d'une réponse (610) à la demande de session depuis l'au moins une SMF, la réponse comprenant une première information d'abonnement pour au moins un abonnement à un événement, et la création d'une première identification sur la base de la première information d'abonnement ; et
la transmission (614), à partir de l'I-SMF, de la première identification à l'AMF pour déclencher que l'AMF change une adresse pour l'au moins un abonnement à un événement de l'au moins une SMF en l'I-SMF.

2. Procédé selon la revendication 1, dans lequel l'abonnement à un événement comprend un ou plusieurs d'un identifiant de corrélation d'abonnement, d'un identifiant de ressource uniforme, URI, et/ou d'un identifiant de corrélation de notification.

3. Procédé selon l'une quelconque des revendications 1 à 2, dans lequel la réponse comprend une indication pour mettre à jour l'au moins un abonnement à un événement à l'I-SMF.

4. Procédé selon l'une quelconque des revendications 1 à 3, comprenant en outre l'ajout d'une nouvelle AMF et le déplacement d'une session avec l'I-SMF de l'AMF vers la nouvelle AMF, dans lequel la nouvelle AMF fournit au moins l'une parmi l'I-SMF et/ou la SMF avec une première identification mise à jour sur la base de la première information d'abonnement.

5. Procédé selon l'une quelconque des revendications 1 à 4, dans lequel la SMF fournit un service d'exposition à un événement, dans lequel le service d'exposition à un événement expose des événements se produisant sur des sessions d'unité de données de protocole à des fonctions de réseau de consommateur.

6. Procédé selon l'une quelconque des revendications 1 à 5, comprenant en outre :
la réception, au niveau de l'I-SMF depuis une nouvelle I-SMF, d'une demande de contexte de session (914) ;
la réponse depuis l'I-SMF à la nouvelle I-SMF avec une réponse de contexte de session (916), où la réponse de contexte de session comprend le contexte de l'I-SMF d'origine qui comprend des détails d'abonnement à un événement par la SMF ;
l'établissement, par la nouvelle I-SMF, d'une interface avec la SMF sur la base du contexte depuis l'I-SMF d'origine (918, 920) et l'AMF.

7. Dispositif de fonction de gestion de session intermédiaire pour gérer des communications sans fil après l'insertion d'une fonction de gestion de session intermédiaire, I-SMF, pour communiquer entre une fonction de gestion d'accès et de mobilité, AMF, et une ou plusieurs fonctions de gestion de session, SMF, le dispositif de fonction de gestion de session intermédiaire comprenant un ou plusieurs processeurs configurés pour :
recevoir, au niveau de l'I-SMF, une demande de session depuis l'AMF, la demande de session comprenant une information SMF, et transférer la demande de session à au moins une SMF parmi ladite une ou lesdites plusieurs SMF sur la base de l'information SMF ;
recevoir, au niveau de l'I-SMF, une réponse à la demande de session depuis l'au moins une SMF, la réponse comprenant une première information d'abonnement pour au moins un abonnement à un événement, et créer une première identification sur la base de la première information d'abonnement ; et
transmettre, depuis l'I-SMF, la première identification à l'AMF pour déclencher que l'AMF change une adresse pour l'au moins un abonnement à un événement depuis l'au moins une SMF en l'I-SMF.

8. Procédé de gestion de communications sans fil après l'insertion d'une fonction de gestion de session intermédiaire I-SMF pour communiquer entre une fonction de gestion d'accès et de mobilité AMF et une ou plusieurs fonctions de gestion de session SMF, le procédé comprenant :
la transmission, depuis l'AMF, d'une demande de session (604) à l'I-SMF, la demande de session comprenant une adresse pour au moins une SMF de ladite une ou desdites plusieurs SMF ;
la réception au niveau de l'AMF d'une réponse à la demande de session depuis l'I-SMF (614), la réponse comprenant une première identification correspondant à au moins un abonnement à un événement depuis l'au moins une SMF ; et
la mise à jour, par l'AMF, d'une adresse pour l'au moins un abonnement à un événement depuis l'au moins une SMF à l'I-SMF sur la base de la première identification.

9. Dispositif de fonction de gestion d'accès et de mobilité pour gérer des communications sans fil après l'insertion d'une fonction de gestion de session intermédiaire, I-SMF, pour communiquer entre le dispositif de fonction de gestion d'accès et de mobilité, AMF, et une ou plusieurs fonctions de gestion de session, SMF, le dispositif de fonction de gestion d'accès et de mobilité comprenant un ou plusieurs processeurs configurés pour :
transmettre, à partir de l'AMF, une demande de session à l'I-SMF, la demande de session comprenant une adresse pour au moins une SMF parmi ladite une ou lesdites plusieurs SMF ;
recevoir, au niveau de l'I-SMF, une réponse à la demande de session depuis l'I-SMF, la réponse comprenant une première identification correspondant à au moins un abonnement à un événement depuis l'au moins une SMF ; et
mettre à jour, par l'AMF, une adresse pour ledit au moins un abonnement à un événement depuis l'au moins une SMF à l'I-SMF sur la base de la première identification.

10. Procédé de gestion de communications sans fil après l'insertion d'une fonction de gestion de session intermédiaire, I-SMF, pour communiquer entre une fonction de gestion d'accès et de mobilité, AMF, et une ou plusieurs fonctions de gestion de session, SMF, le procédé comprenant :
la transmission (704), depuis l'AMF à l'I-SMF, d'une demande de session comprenant une adresse pour au moins une SMF parmi ladite une ou lesdites plusieurs SMF ;
la réception (714), au niveau de l'AMF depuis l'I-SMF, d'une réponse comprenant une information de fonction de plan d'utilisateur, UPF, et le changement (716), dans une base de données de l'AMF, d'une adresse pour au moins un abonnement à un événement correspondant à l'au moins une SMF en une adresse correspondant à l'I-SMF.

11. Dispositif de fonction de gestion d'accès et de mobilité pour la gestion de communications sans fil après l'insertion d'une fonction de gestion de session intermédiaire, I-SMF, pour communiquer entre le dispositif de fonction de gestion d'accès et de mobilité, AMF, et une ou plusieurs fonctions de gestion de session, SMF, le dispositif de fonction de gestion d'accès et de mobilité comprenant un ou plusieurs processeurs configurés pour :
transmettre (704), depuis l'AMF à l'I-SMF, une demande de session comprenant une adresse pour au moins une SMF de ladite une ou desdites plusieurs SMF ;
recevoir (714), au niveau de l'AMF depuis l'I-SMF, une réponse comprenant une information de fonction de plan d'utilisateur, UPF, et
changer (716), dans une base de données de l'AMF, une adresse pour au moins un abonnement à un événement correspondant à l'au moins une SMF en une adresse correspondant à l'I-SMF.
